# EUROPÄISCHE PATENTSCHRIFT

(11) **EP 2 337 961 B1**
(45) Veröffentlichungstag und Bekanntmachung des Hinweises auf die Patenterteilung: **18.09.2013**
(21) Anmeldenummer: 09783475.8
(22) Anmeldetag: 28.09.2009
(51) Int. Cl.: F16C 35/067, H02K 5/173

(54) **HALTEPLATTE FÜR LAGER**
SUPPORT PLATE FOR BEARINGS
PLAQUE DE SUPPORT POUR PALIER

(30) Priorität: 02.10.2008 DE 102008042552
(43) Veröffentlichungstag der Anmeldung: 29.06.2011
(73) Patentinhaber: Robert Bosch GmbH, 70442 Stuttgart (DE)
(72) Erfinder: EINBOCK, Stefan, 70197 Stuttgart (DE); RIOU, Vincent, 71636 Ludwigsburg (DE); SCHROTH, Ruediger, 71272 Renningen-Malmsheim (DE)
(86) Internationale Anmeldenummer: PCT/EP2009/062516
(87) Internationale Veröffentlichungsnummer: WO 2010/037710

(56) Entgegenhaltungen:
- EP-A1- 0 346 690
- EP-A2- 1 199 441
- DE-A1- 10 355 363
- DE-A1- 19 605 971
- DE-A1-102004 053 078
- DE-B3- 10 355 398
- US-A- 4 212 098
- US-A1- 2008 226 209

## Beschreibung

### Stand der Technik

In der Regel werden luftgekühlte Generatoren für Anwendungen im Automobilbereich mittels eines Festlagers in einem ersten Lagerschild (A-Lagerschild) und eines Loslagers in einem zweiten Lagerschild (B-Lagerschild) gelagert. Ein als Lager eingesetztes Kugellager ist dabei axial zwischen einem Lagerschild und einer Halteplatte fixiert. Durch das generell vorhandene Lagerspiel kommt es zu Schwingungen des Läufers als Gesamtkörper in axialer Richtung. Dieses auch als Läuferprellen bezeichnete Phänomen tritt in der Regel zwischen 100 Hz und 500 Hz auf und geht im Allgemeinen mit sehr hohen mechanischen Belastungen im Generator an verschiedenen Bauteilen desselben einher.

DE 44 03 957 A1 bezieht sich auf ein Flanschlager. Dieses Flanschlager dient der Aufnahme einer Zinkenwelle der Haspel oder der Aufnehmertrommel einer Erntemaschine oder einer anderen entsprechend ausgerüsteten landwirtschaftlichen Maschine. Das Flanschlager umfasst einen einseitig aufgetrennten Lagerkörper, dessen Außenmantel einen zylindrischen Mittelabschnitt besitzt. An diesen schließen sich beidseitig kegelförmig abgeschrägte Abschnitte an. Der Lagerkörper ist mit einem Steg versehen, der ein lagergenaues Einsetzen der Lager in die Aufnahme eines Haspelsterns gestattet und gleichzeitig als Verdrehsicherung dient. Die Lagerhälften sind durch ein Filmscharnier elastisch miteinander verbunden, wobei anschließend an das Filmscharnier eine Aussparung vorgesehen ist, die das Aufweiten des aus einem widerstandsfähigen Kunststoff hergestellten Lagerkörpers bei der Montage und Demontage erleichtert. Bei dieser Lösung handelt es sich um ein Scharnier, welches aufgrund der geringeren Steifigkeit an einer gekerbten Stelle leichter aufgebogen werden kann.

US 3,431,032 offenbart ein zylindrisches Lagergehäuse, welches in axiale Richtung gesehen einen gefrästen Schlitz aufweist. Dadurch werden sich einstellende innere Spannungen, so z.B. sich beim Gießen einstellende Eigenspannungen, abgebaut. Durch den Schlitz ist ein Verformen des Lagergehäuses möglich.

DE 10 2004 053 078 A1 bezieht sich auf eine Lageranordnung. Diese umfasst einen Lagerträger, der mit einem Lager, das vorzugsweise als Wälzlager ausgebildet ist, verbunden ist. Das Lager weist in einem seiner Lagerringe eine in Umfangsrichtung umlaufende Nut auf. In diese greift mindestens ein am Lagerträger angeordneter und sich in radiale Richtung erstreckender Vorsprung ein. Der Lagerträger weist an einer Umfangsstelle einen sich im Wesentlichen in radiale Richtung erstreckenden Schlitz auf.

Schließlich zeigt WO 03/081750 A1 einen Generator für ein Fahrzeug, wobei der Generator eine Halteplatte umfasst, die einen sich in radiale Richtung erstreckenden Schlitz aufweist. Dieser sich in radiale Richtung erstreckende Schlitz dient als Toleranzausgleich. Gemäß dieser Lösung werden bei der Verschraubung der Halteplatte eventuell auftretende Verspannungen abgebaut, da eine Verformung des Materials der Halteplatte durch den Schlitz möglich ist und demzufolge ein Abbau der Spannungen stattfinden kann.

EP 0 346 690 A1 offenbart ein Verfahren zum Fixieren eines Lagers mit allen Merkmalen des Oberbegriffs vom Anspruch 1.

### Offenbarung der Erfindung

Der vorliegenden Erfindung liegt die Aufgabe zugrunde, die Bauteile des Generators davor zu bewahren, dass mechanische Überlastungen, insbesondere zu hohe Schwingbeschleunigungen zu lange auf die Bauteile des Generators einwirken.

Diese Aufgabe wird mit dem Verfahren vom Anspruch 1 gelöst.

Der erfindungsgemäß vorgeschlagenen Lösung folgend, wird bei einer elektrischen Maschine, so z.B. einem im Automobilbereich eingesetzten Generator, die Halteplatte im Bereich der Lagerung derart konfiguriert, dass sich deren makroskopische Geometrie während des Betriebs des Generators verändert. Insbesondere wird die Änderung der makroskopischen Geometrie der Halteplatte durch sichtbare plastische Verformungen bis hin zu Brüchen der Halteplatte dargestellt. Durch die Änderung der Geometrie der Halteplatte lässt sich erreichen, dass mechanische Bauteilbeanspruchungen im Frequenzbereich z.B. zwischen 100 Hz und 500 Hz nur für eine geringe Zeitspanne auf die Bauteile der elektrischen Maschine, so z.B. eines Generators, einwirken und zum Großteil vom Material der Halteplatte aufgenommen werden. Das Material der Halteplatte dient insoweit als Absorber bzw. als Dämpfer, insbesondere für hohe mechanische Schwingbeschleunigungen.

Die Änderung der makroskopischen Geometrie der Halteplatte wird durch das induzierte Erzwingen von Rissen bei überhöhten Lasten durch vorgegebene Sollbruchstellen erreicht. Dazu können an definierten Stellen der Halteplatte Kerben eingebracht werden, die zu hohen, lokal jedoch begrenzten Beanspruchungsüberhöhungen des Materials der Halteplatte führen. Übersteigen diese begrenzten Beanspruchungsüberhöhungen einen Grenzwert, führt dies zwangsläufig zum Auftreten einer plastischen Verformung und in letzter Konsequenz zur Rissbildung. Durch die an einer oder mehreren Stellen an- oder durchgebrochene Halteplatten wird die Übertragung hoher mechanischer Bauteilbelastungen an die Bauteile des Generators vermieden und von der an-/durchgebrochenen Halteplatte gedämpft bzw. absorbiert.

Neben dem Ausbilden von Kerben an definierten Stellen der Halteplatte können plastische Verformungen in der Halteplatte bei Überlasten, so z.B. auch durch unterschiedliche lokale Steifigkeiten, so z.B. Verjüngungsbereichen der Halteplatte, erzwungen werden. Dadurch ergibt sich eine Verringerung der Belastung der funktional wichtigen Bauteile der Halteplatte.

Die erfindungsgemäß vorgeschlagene Halteplatte wird insbesondere derart ausgelegt, dass sich mindestens ein Riss, d.h. ein Anbrechen bzw. ein Durchbrechen der Halteplatte, bei mehr als 150000 Lastwechseln mit Beschleunigungen über 400 m/s² einstellt. Solche Beschleunigungen treten während des normalen Fahrzeugbetriebes nicht auf. Hingegen dürfen sich keine Brüche bzw. Risse bei Beschleunigungswerten unter 300 m/s² einstellen. Nach dem Auftreten mindestens eines Bruches in der erfindungsgemäß vorgeschlagenen Halteplatte ändert sich das Antwortverhalten des Generators, wodurch sich aufgrund sich einstellender Dämpfungseffekte die maximale Last verringert.

Sollten die Bruchflächen nach dem Bruch der Halteplatte nicht aneinander reiben, geht dies mit einem Verlust an Reibungsarbeit einher. Jedoch wird eine durchgebrochene bzw. angebrochene Halteplatte eine geringere Steifigkeit haben im Vergleich zu einer intakten, d.h. ungebrochenen Halteplatte. Eine verringerte Steifigkeit der Halteplatte führt zu größeren Verformungen derselben und dadurch zusätzlich zu Dämpfungspotenzial, welches sich zusätzlich zu dem an der Bruchfläche vorliegenden Dämpfungspotenzial ergibt. Ein weiterer positiver Effekt ist, dass sich durch die geringere Steifigkeit der Halteplatte das Übertragungsverhalten des Generators positiv beeinflussen lässt. Dieser Effekt ist im Wesentlichen unabhängig davon, ob die Bruchflächen der Halteplatte aneinander reiben oder ob dies nicht der Fall ist.

Hinsichtlich des Teilungskreises der Halteplattenschrauben ist anzustreben, dass dieser dem Teilungskreis der Löcher, die in der Halteplatte ausgebildet werden, entspricht, d.h. die beiden Teilungskreise identische Maße aufweisen.

Bei der Ausführungsvariante der erfindungsgemäß vorgeschlagenen Halteplatte, die an defi-nierten Stellen mit Kerben versehen ist, ist anzustreben, dass die Geometrie der Kerbe derart gestaltet ist, dass diese eine Formzahl von Kₜ >2,0 aufweist.

### Kurze Beschreibung der Zeichnungen

Anhand der Zeichnung wird die Erfindung nachstehend eingehender beschrieben.

Es zeigt:
- Figur 1: einen Längsschnitt durch einen Generator,
- Figur 2: die Draufsicht auf eine konventionell ausgebildete Halteplatte,
- Figur 3: eine erste Ausführungsvariante der erfindungsgemäß vorgeschlagenen Halte-platte,
- Figur 3a: die sich verändernde makroskopische Geometrie der Halteplatte gemäß der ers-ten Ausführungsform nach Figur 3,
- Figur 4: eine weitere, zweite Ausführungsmöglichkeit der erfindungsgemäß vorgeschla-genen Halteplatte,
- Figur 4a: die sich einstellende Änderung der makroskopischen Geometrie der Halteplatte gemäß der zweiten Ausführungsform gemäß Figur 4,
- Figur 5: eine weitere, dritte Ausführungsmöglichkeit der erfindungsgemäß vorgeschla-genen Halteplatte,
- Figur 5a: die sich ändernde makroskopische Geometrie der in Figur 5 dargestellten dritten Ausführungsform der erfindungsgemäß vorgeschlagenen Halteplatte,
- Figur 6: einen Horizontalschnittverlauf durch die Halteplatte,
- Figur 7: einen Schnittverlauf gemäß des in Figur 6 dargestellten Schnittverlaufes A-A,
- Figur 7a: die sich einstellende plastische Verformung in der Schnittebene gemäß der Dar-stellung in Figur 7,
- Figur 8: einen Vertikalschnitt durch die Halteplatte,
- Figuren 9 und 9a: die Darstellung von Bruchflächen, die sich beim Durch- bzw. An-brechen der erfindungsgemäß vorgeschlagenen Halteplatte einstellen, und
- Figuren 10 und 10a: sich einstellende makroskopische Geometrieänderungen in der er-findungsgemäß vorgeschlagenen Halteplatte in der Schnittebene des Schnittes B-B gemäß Figur 6.

### Ausführungsformen

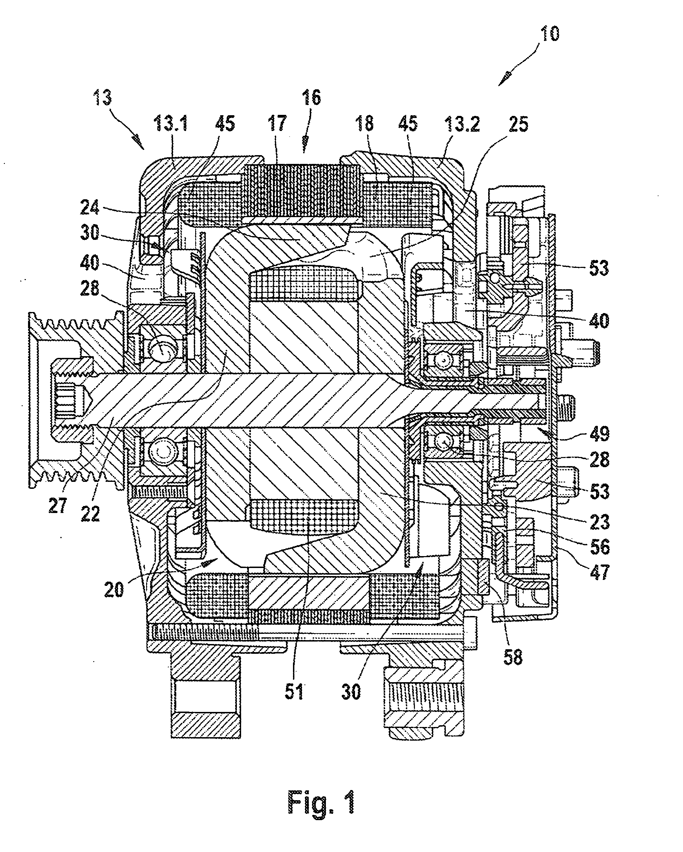

Der Darstellung gemäß Figur 1 ist ein Schnitt durch eine elektrische Maschine 10, hier als Generator bzw. Drehstromgenerator für Kraftfahrzeuge ausgeführt, dargestellt. Diese elektrische Maschine 10 weist unter anderem ein zweiteiliges Gehäuse 13 auf, das aus einem ersten Lagerschild 13.1 sowie einem zweiten Lagerschild 13.2 besteht. Das erste Lagerschild 13.1 und das zweite Lagerschild 13.2 nehmen in sich einen Stator 16 auf, der einerseits aus einem im Wesentlichen kreisringförmigen Ständereisen 17 besteht, und in dessen nach radial innen gerichtete, sich axial erstreckende Nuten eine Ständerwicklung 18 eingelegt ist. Dieser ringförmige Stator 16 umgibt mit seiner radial nach innen gerichteten genuteten Oberfläche einen Rotor 20, welcher als Klauenpolläufer ausgebildet sein kann. Der Rotor 20 besteht unter anderem aus zwei Klauenpolplatinen 22 bzw. 23, an deren Außenumfang jeweils sich in axialer Richtung erstreckende Klauenpolfinger 24 und 25 angeordnet sind. Die Klauenpolplatinen 22 bzw. 23 sind innerhalb des Rotors 20 derart angeordnet, dass deren sich in axiale Richtung erstreckende Klauenpolfinger 24 bzw. 25 am Umfang des Rotors 20 einander abwechseln. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Welle 27 und je einem auf je einer Rotorseite befindlichen Wälzlager 28 in den ersten und zweiten Lagerschilden 13.1 bzw. 13.2 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Der Lüfter 30 dient dazu, über Öffnungen 40 in den Lagerschilden 13.1 und 13.2 einen Luftaus-tausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels des Lüfters 30 Kühlluft in den Innenraum der elektrischen Maschine 10 eingesaugt wird. Diese Kühlluft wird durch die Rotation des Lüfters 30 nach radial außen beschleunigt, so dass diese durch den kühlluftdurchlässigen Wicklungsüberhang 45 hindurchtreten kann. Durch diesen Effekt wird der Wicklungsüberhang 45 gekühlt. Die Kühlluft nimmt nach dem Hindurchtreten durch den Wicklungsüberhang 45 bzw. nach dem Umströmen dieses Wicklungsüberhanges 45 einen Weg nach radial außen, durch eine in dieser Figur 1 nicht dargestellte Öffnung.

Aus der Darstellung gemäß Figur 1 geht des Weiteren hervor, dass sich auf der rechten Seite eine Schutzkappe 47 befindet, die verschiedene Bauteile vor Umgebungseinflüssen schützt. So deckt diese Schutzkappe 47 beispielsweise eine Schleifringbaugruppe 49 ab, die dazu dient, eine Erregerwicklung 51 mit Erregerstrom zu versorgen. Um diese Schleifring-baugruppe 49 herum ist ein Kühlkörper 53 angeordnet, der hier als Pluskühlkörper wirkt. Als so genannte Minuskühlkörper wirkt das zweite Lagerschild 13.2. Zwischen dem zweiten Lagerschild 13.2 und dem Kühlkörper 53 ist eine Anschlussplatte 56 angeordnet, die dazu dient, im Lagerschild 13.2 angeordnete Minusdioden 58 und hier in dieser Darstellung nicht gezeigte Plusdioden im Kühlkörper 53 miteinander zu verbinden und somit eine an sich bekannte Brückenschaltung darzustellen.

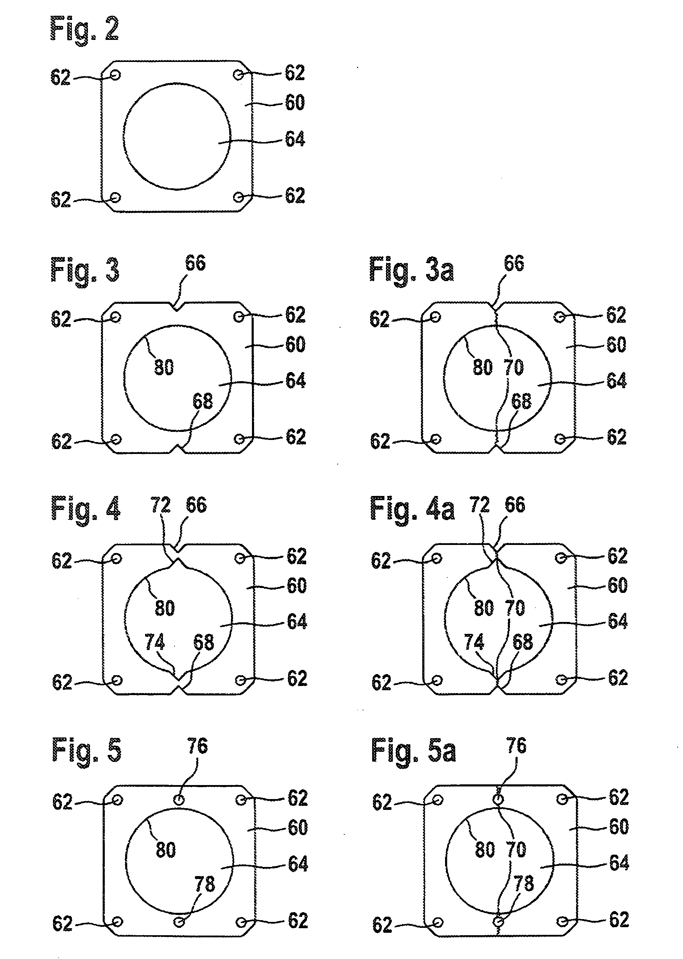

Der Darstellung gemäß Figur 2 ist eine Halteplatte, die an einer elektrischen Maschine eingesetzt wird, gemäß des Standes der Technik zu entnehmen.

Die Halteplatte 60, die rechteckig, rund oder, wie in Figur 2 dargestellt, quadratisch ausgebildet sein kann, umfasst eine Durchgangsöffnung 64 sowie eine Anzahl von Befestigungsöffnungen 62. Die Befestigungsöffnungen 62 können als eingestanzte Löcher, als Bohrungen mit oder ohne Gewinde oder dergleichen gefertigt sein. Durch die Halteplatte 60 gemäß der Darstellung in Figur 2 werden die im Schnitt gemäß Figur 1 dargestellten Wälzlager 28 im Gehäuse der elektrischen Maschine 10 fixiert. Aus der Darstellung gemäß Figur 2 geht hervor, dass die dort dargestellte Halteplatte 60 in Bezug auf ihre äußere und ihre innere Umrandung eben ausgebildet ist.

Figur 3 zeigt eine erfindungsgemäß vorgeschlagene, in einer ersten Ausführungsvariante dargestellte Halteplatte.

Aus der Darstellung gemäß Figur 3 geht hervor, dass die Öffnung 64 einen Innendurchmesser 80 aufweist und eine Anzahl von Befestigungsöffnungen 62 enthält. Am Außenrand der Halteplatte 60 gemäß der Darstellung in Figur 3 befinden sich jeweils in 6-Uhr-Anordnung und 12-Uhr-Anordnung eine erste Außenkerbe 66 sowie eine dieser gegenüberliegende, zweite Außenkerbe 68. Die erste Außenkerbe 66 sowie die zweite Außenkerbe 68 könnten auch um 90° verdreht ausgebildet sein, d.h. in der 3-Uhr- sowie der 9-Uhr-Anordnung ausgebildet werden. Bevorzugt werden an der Halteplatte 12 in ihrer ersten Ausführungsform zwei einander gegenüberliegende Außenkerben 66, 68 ausgebildet.

Wie aus der Darstellung gemäß Figur 3a hervorgeht, stellen sich bei Betrieb des Generators und bei mechanischer Belastung der Halteplatte 60 vom Kerbgrund der ersten bzw. der zweiten Außenkerbe 66 bzw. 68 nach innen auf den Innendurchmesser 80 zulaufende Risse 70 ein. Diese Risse 70 stellen eine makroskopische Änderung der Geometrie der Halteplatte 60 dar und wandeln die mechanischen Belastungen in eben die Risse 70 um, so dass Belastungsspitzen nicht von den Bauteilen der elektrischen Maschine 10 gemäß der Darstellung in Figur 1, sondern im Wesentlichen von der Halteplatte 60 aufgenommen werden können.

Bevorzugt ist die Halteeinrichtung 60 plattenförmig, d.h. als Halteplatte ausgeführt.

In Bezug auf die sich vom Kerbgrund der Außenkerben 66 und 68 in radiale Richtung auf den Innendurchmesser 80 der zentralen Öffnung 64 erstreckenden Risse 70 ist anzumerken, dass die Flächen, die den Riss 70 begrenzen, relativ rau und spröde sind und demzufolge im Sinne der vorliegenden Erfindung weitere Dämpfungsarbeit verrichten, indem sie aufeinander reiben und demzufolge unter Inkaufnahme einer leichten Temperaturerhöhung Schwingungsbeschleunigungen absorbieren.

Der Darstellung gemäß Figur 4 ist eine weitere, zweite Ausführungsvariante der erfindungsgemäß vorgeschlagenen, insbesondere plattenförmig ausgebildeten Halteeinrichtung zu entnehmen.

Figur 4 zeigt, dass neben der ersten Außenkerbe 66 und der zweiten Außenkerbe 68 am Außenumfang der plattenförmigen Halteeinrichtung 60 auch am Innendurchmesser 80 der zentralen Öffnung 64 einander gegenüberliegende Kerben, d.h. eine erste Innenkerbe 72 und eine zweite Innenkerbe 74, ausgeführt sind. Analog zur Orientierung der ersten Außenkerbe 66 in 12-Uhr-Position befindet sich die erste Innenkerbe 72 ebenfalls in 12-Uhr-Position am Innendurchmesser 80 der zentralen Öffnung 64. Gleiches gilt für die zweite Innenkerbe 74, die sich analog zur zweiten Außenkerbe 68 in der 6-Uhr-Position am Innendurchmesser 80 der zentralen Öffnung 64 befindet. Selbstverständlich können sowohl die Innenkerben 72, 74 als auch die Außenkerben 66 jeweils um 90° verdreht zueinander angeordnet sein.

Figur 4a zeigt das sich einstellende Rissmuster der Risse 70 bei mechanischer Beanspruchung der erfindungsgemäß vorgeschlagenen, bevorzugt plattenförmig ausgebildeten Halteeinrichtung 60. Aufgrund des geringen verbleibenden Materialsteges zwischen den einander zuweisenden Kerbgründen der ersten Außenkerbe 66 und der ersten Innenkerbe 72 bzw. der zweiten Außenkerbe 68 und der zweiten Innenkerbe 74 verlaufen relativ kurze Risse 70, wie in Figur 4a angedeutet, zwischen den jeweils einander zuweisenden Kerbgründen.

Die sich einstellenden Flächen, die die Risse 70 begrenzen, weisen eine relativ hohe Rauigkeit auf, was günstig hinsichtlich einer zusätzlichen Dämpfungsarbeit, über die Schwingbeschleunigungen abgebaut werden können, ist.

Der Darstellung gemäß Figur 5 ist eine weitere, dritte Ausführungsvariante der erfindungsgemäß vorgeschlagenen, insbesondere plattenförmig ausgebildeten Halteeinrichtung 60 zu entnehmen. Im Unterschied zu der ersten Ausführungsvariante gemäß Figur 3 und der zweiten Ausführungsvariante gemäß Figur 4 weist die erfindungsgemäß vorgeschlagene, plattenförmig ausgebildete Halteeinrichtung 60 gemäß Figur 5 einander gegenüberliegend orientierte muschelförmige Öffnungen 76, 78 im Vollmaterial der Halteeinrichtung 60 auf. Dadurch ergeben sich jeweils von den Enden der Öffnungen 76 bzw. 78 erstreckende Materialstege, die sich in Radialrichtung sowohl zum Außenumfang der plattenförmig ausgebildeten Halteeinrichtung 60 als auch zum Innendurchmesser 80, der die zentrale Öffnung 64 begrenzt, erstrecken. In diesen verbleibenden, relativ kurzen Materialstrecken stellen sich bei mechanischer Beanspruchung der erfindungsgemäß vorgeschlagenen Halteeinrichtung 60 aufgrund von auftretenden Schwingbeschleunigungen Beanspruchungsüberhöhungen ein, die zu den in Figur 5a dargestellten Rissverläufen 70 einerseits in Richtung des Außenumfangs und der Halteeinrichtung 60 und andererseits in Richtung des Innendurchmessers 80 der zentralen Öffnung 64 führen.

Sämtlichen Ausführungsvarianten gemäß der Figuren 3 bis 5 der erfindungsgemäß vorgeschlagenen, insbesondere plattenförmig ausgebildeten Halteeinrichtung sind Befestigungsöffnungen 62 gemeinsam. Diese Befestigungsöffnungen 62 können einfach gestanzte Löcher sein, oder es können Bohrungen sein, die mit oder ohne Innengewinde ausgeführt sind. Bevorzugt sind die Teilkreisdurchmesser sowohl des Lochkreises der Befestigungsöffnungen 62 als auch die der die Befestigungsöffnungen 62 durchsetzenden Schrauben identisch.

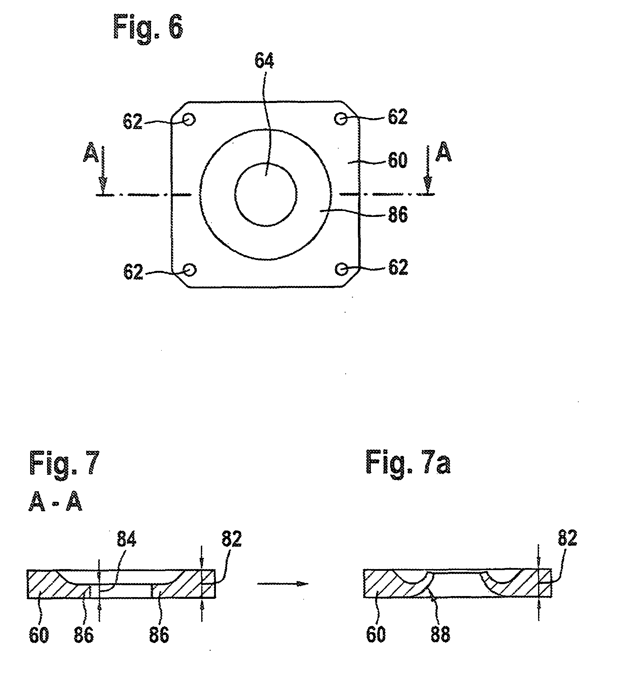

Der Darstellung gemäß Figur 6 ist eine Darstellung der Halteeinrichtung 60 zu entnehmen, in welcher ein horizontaler Schnittverlauf A-A eingetragen ist.

Figur 7 und 7a zeigen die in Figur 6 mit Schnittverlauf A-A dargestellte erfindungsgemäß vorgeschlagene, insbesondere plattenförmig ausgebildete Halteeinrichtung 60 in der Schnittebene A-A. Aus der Schnittdarstellung gemäß Figur 7 geht hervor, dass die Halteeinrichtung 60 im Bereich der zentralen Öffnung 64 eine in Bezug auf ihre Dicke 82 reduzierte Dicke 84, d.h. eine Verjüngung 84 aufweist. Durch den verjüngten Bereich 84, der an die zentrale Öffnung 64 der insbesondere plattenförmig ausgebildeten Halteeinrichtung 60 angrenzt, ergeben sich einander gegenüberliegende Stege 86, die bei einer mechanischen Beanspruchung der insbesondere plattenförmig ausgebildeten Halteeinrichtung 60 eine plastische Verformung 88 erfahren, wie in Figur 7a dargestellt.

Die in Figur 7a dargestellte plastische Verformung 88 der einander gegenüberliegenden Enden der Stege 86 stellt eine makroskopische Veränderung der Geometrie der plattenförmig ausgebildeten Halteeinrichtung 60 dar, durch welche die bei mechanischer Belastung der plattenförmig ausgebildeten Halteeinrichtung 60 in dieser entstehenden Spannungen abgebaut werden können und demzufolge ein Durchbruch bzw. ein Anbruch der insbesondere plattenförmig ausgebildeten Halteeinrichtung 60 in Kauf genommen wird, um dadurch die Komponenten der elektrischen Maschine 10 gemäß der Schnittdarstellung in Figur 1 vor übermäßigen mechanischen Beanspruchungen im erwähnten Frequenzbereich zu schützen.

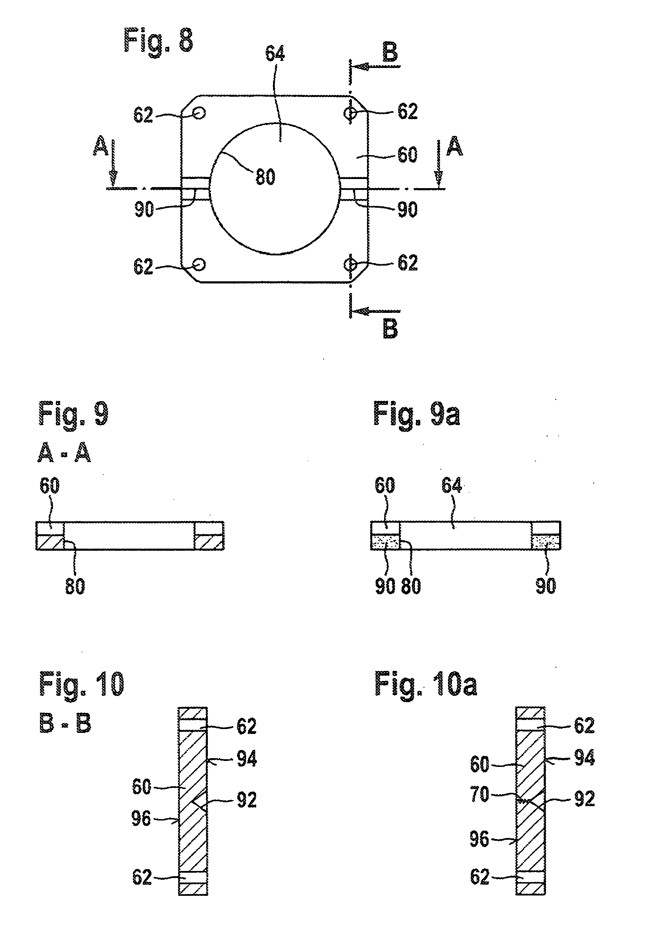

Figur 8 zeigt einen Schnittverlauf A-A, B-B. Figur 9 zeigt den Verlauf durch die Halteeinrichtung 60 vor dem Bruch, während Figur 9a den Schnittverlauf nach dem Auftreten eines Bruches in der erfindungsgemäß vorgeschlagenen Halteeinrichtung 60 wiedergibt.

Den Figuren 10 bzw. 10a ist gemäß der Schnittdarstellung in Figur 8 ein Schnittverlauf B-B zu entnehmen. Gemäß des Schnittverlaufes B-B wie in Figur 10 dargestellt, wird an einer der Planseiten 94 bzw. 96 der insbesondere plattenförmig ausgebildeten Halteeinrichtung 60 eine planseitige Kerbe 92 eingebracht. Dadurch stellt sich zwischen dem Kerbgrund der planseitigen Kerbe 92 und der dieser gegenüberliegenden Planseite 94 eine reduzierte Dicke ein. Genau in dieser reduzierten Dicke verläuft bei mechanischer Überbeanspruchung der erfindungsgemäß vorgeschlagenen, bevorzugt plattenförmig ausgebildeten Halteeinrichtung 60 ein Riss 70, wie in der Darstellung gemäß Figur 10a angedeutet. Der Riss 70 erstreckt sich vom Kerbgrund der planseitigen Kerbe 92 zur Planseite 96. Alternativ zur in Figur 10 bzw. 10a dargestellten Position der planseitigen Kerbe 92 an der ersten Planseite 94 kann die planseitige Kerbe 92 selbstverständlich auch an der gegenüberliegenden zweiten Planseite 96 der erfindungsgemäß vorgeschlagenen, insbesondere plattenförmig ausgebildeten Halteeinrichtung 60 ausgebildet sein.

Zu den Figuren 3, 4, 5 sowie 10 ist festzuhalten, dass die dort dargestellten Kerben, seien es Außenkerben 66, 68, seien es Innenkerben 72, 74 oder seien es planseitige Kerben 92, allesamt bevorzugt mit einer Formzahl Kₜ > 2,0 ausgeführt sind. Die Formzahl *x_{Kt}* ist definiert als Quotient aus maximaler Beanspruchung und Nennbeanspruchung.

Bei den in den Figuren 3, 4, 5 bzw. 7 und 9 dargestellten Ausführungsformen der erfindungsgemäß vorgeschlagenen, insbesondere plattenförmig ausgebildeten Halteeinrichtung 60 ist zu bemerken, dass die Geometrie derselben derart ausgebildet ist, dass die Halteeinrichtung 60 bricht, wenn mehr als 150000 Lastwechsel mit Beschleunigungen über 400 m/s² auftreten. Die erfindungsgemäß vorgeschlagene, insbesondere plattenförmig ausgebildete Halteeinrichtung 60 wird bevorzugt so dimensioniert, dass diese bei Beschleunigungen unterhalb von 300 m/s² nicht bricht. Nach dem Brechen bzw. Anbrechen der erfindungsgemäß vorgeschlagenen Halteeinrichtung 60 durch Auftreten mindestens eines Risses 70 ändert sich das Antwortverhalten der elektrischen Maschine 10, wodurch sich durch Dämpfungseffekte die maximale Last verringert.

Wenn die in Figur 9a dargestellten Bruchflächen 90 nach dem Bruch nicht mehr aneinander reiben, wird ein Teil der Reibungsarbeit, in der Energie abgebaut wird, verloren gehen. Allerdings wird eine gebrochene bzw. angebrochene Halteeinrichtung 60 eine geringere Steifigkeit aufweisen als eine intakte Halteeinrichtung 60. Eine verringerte Steifigkeit der Halteeinrichtung 60 wiederum führt zu etwas größeren plastischen Verformungen 88, wie in Figur 7a übertrieben dargestellt, und dadurch zusätzlich zu Dämpfung, die als eine Zusatzdämpfung in Bezug auf die mit den Bruchflächen 90 erzielbare Dämpfung anzusehen ist.

## Patentansprüche

1. Verfahren zum Fixieren eines Lagers (28) an einem Lagerschild (13.1, 13.2) eines Gehäuses (13) einer elektrischen Maschine (10), in der ein Rotor (20) mit einer Welle (27) drehbar gelagert ist, mittels einer Halteeinrichtung (60), wobei die Halteeinrichtung (60) im Wesentlichen plattenförmig ausgeführt ist und eine Anzahl von Befestigungsöffnungen (62) aufweist, die um eine Öffnung (64) angeordnet sind, wobei die Halteeinrichtung (60) mindestens eine Sollbruchstelle (66, 68; 72, 74; 76, 78; 92) aufweist, die lokal begrenzte Beanspruchungsüberhöhungen bewirkt, **dadurch gekennzeichnet, dass** die Beanspruchungsüberhöhungen Rissbildung verursachen, wobei sich ein Riss in der Halteinrichtung einstellt, und ein Bruch auftritt, der einen Dämpfungseffekt bewirkt.

2. Verfahren gemäß Anspruch 1, **dadurch gekennzeichnet, dass** mindestens eine Sollbruchstelle (66, 68; 72, 74) als Kerbe ausgeführt ist.

3. Verfahren gemäß Anspruch 1, **dadurch gekennzeichnet, dass** mindestens eine Sollbruchstelle (76, 78) als Durchbruch im Material der Halteeinrichtung (60) ausgeführt ist.

4. Verfahren gemäß Anspruch 2, **dadurch gekennzeichnet, dass** mindestens eine Sollbruchstelle (92) als Kerbe an einer Planseite (94, 96) der Halteeinrichtung (60) ausgeführt ist.

5. Verfahren gemäß Anspruch 2, **dadurch gekennzeichnet, dass** mindestens eine Sollbruchstelle (66, 68; 72, 74) am Außenumfang der Halteeinrichtung (60) ausgeführt ist.

6. Verfahren gemäß Anspruch 2, **dadurch gekennzeichnet, dass** eine Anzahl von Sollbruchstellen (66, 68; 72, 74) am Außenumfang und/oder an einem Innendurchmesser (80) der zentralen Öffnung (64) ausgeführt sind.

7. Verfahren gemäß Anspruch 2, **dadurch gekennzeichnet, dass** diese in variabler Dicke (82, 84) ausgeführt ist.

8. Verfahren gemäß Anspruch 7, **dadurch gekennzeichnet, dass** diese eine Verjüngung (84) aufweist, in der plastisch deformierbare Stege (86) verlaufen.

9. Verfahren gemäß Anspruch 2, **dadurch gekennzeichnet, dass** mindestens eine als Kerbe ausgeführte Sollbruchstelle (66, 68; 72, 74; 92) eine Formzahl Kₜ > 2,0 aufweist.

10. Verfahren gemäß Anspruch 6, **dadurch gekennzeichnet, dass** mindestens zwei Sollbruchstellen (66, 68; 72, 74) am Außenumfang und/oder am Innendurchmesser (80) der zentralen Öffnung (64) einander gegenüberliegend angeordnet sind.

11. Verfahren gemäß Anspruch 6, **dadurch gekennzeichnet, dass** die mindestens zwei Sollbruchstellen (66, 68; 72, 74) am Außenumfang der Halteeinrichtung (60) in 6-Uhr-Position und in 12-Uhr-Position, oder am Außenumfang in 3-Uhr-Position und in 9-Uhr-Position liegen und/oder am Innendurchmesser (80) der zentralen Öffnung (64) in 6-Uhr-Position und in 12-Uhr-Position oder in 3-Uhr-Position und 9-Uhr-Position angeordnet sind.

## Claims

1. Method for fixing a bearing (28) on a bearing plate (13.1, 13.2) of a housing (13) of an electric machine (10), in which a rotor (20) is rotatably mounted with a shaft (27) by means of a support device (60), wherein the support device (60) is of substantially plate-shaped configuration and has a number of fastening openings (62) which are arranged around an opening (64), wherein the support device (60) has at least one predetermined break point (66, 68; 72, 74; 76, 78; 92) which brings about locally delimited excessive loadings, **characterized in that** the excessive loadings cause a crack, wherein a crack is produced in the support device, and a fracture appears which brings about a damping effect.

2. Method according to Claim 1, **characterized in that** at least one predetermined break point (66, 68; 72, 74) is configured as a notch.

3. Method according to Claim 1, **characterized in that** at least one predetermined break point (76, 78) is configured as an aperture in the material of the support device (60).

4. Method according to Claim 2, **characterized in that** at least one predetermined break point (92) is configured as a notch on a planar side (94, 96) of the support device (60).

5. Method according to Claim 2, **characterized in that** at least one predetermined break point (66, 68; 72, 74) is configured on the external circumference of the support device (60).

6. Method according to Claim 2, **characterized in that** a number of predetermined break points (66, 68; 72, 74) are configured on the external circumference and/or on an internal diameter (80) of the central opening (64).

7. Method according to Claim 2, **characterized in that** it is configured with a variable thickness (82, 84).

8. Method according to Claim 7, **characterized in that** it has a tapered section (84), in which plastically deformable webs (86) extend.

9. Method according to Claim 2, **characterized in that** at least one predetermined break point (66, 68; 72, 74; 92) which is configured as a notch has a stress concentration factor of Kₜ > 2.0.

10. Method according to Claim 6, **characterized in that** at least two predetermined break points (66, 68; 72, 74) are arranged so as to lie opposite one another on the external circumference and/or on the internal diameter (80) of the central opening (64).

11. Method according to Claim 6, **characterized in that** the at least two predetermined break points (66, 68; 72, 74) lie on the external circumference of the support device (60) at the 6 o'clock position and in the 12 o'clock position, or on the external circumference in the 3 o'clock position and in the 9 o'clock position, and/or are arranged on the internal diameter (80) of the central opening (64) in the 6 o'clock position and in the 12 o'clock position or in the 3 o'clock position and the 9 o'clock position.

## Revendications

1. Procédé pour fixer au moyen d'un dispositif de maintien (60) un palier (28) sur un flasque (13.1, 13.2) du boîtier (13) d'une machine électrique (10) dans lequel un rotor (20) doté d'un arbre (27) est monté à rotation,
le dispositif de maintien (60) étant essentiellement en forme de plaque et présentant un certain nombre d'ouvertures de fixation (62) disposées autour d'une ouverture (64),
le dispositif de maintien (60) présentant au moins un emplacement (66, 68; 72, 74; 76, 78; 92) de rupture préférentielle qui a pour effet des augmentations locales limitées des sollicitations,
**caractérisé en ce que**
les augmentations de sollicitation provoquent la formation de fissures et
**en ce qu'**une fissure se forme dans le dispositif de maintien et qu'une rupture survient pour exercer un effet d'amortissement.

2. Procédé selon la revendication 1, **caractérisé en ce qu'**au moins un emplacement (66, 68; 72, 74) de rupture préférentielle est configuré comme entaille.

3. Procédé selon la revendication 1, **caractérisé en ce qu'**au moins un emplacement (76, 78) de rupture préférentielle est configuré comme perforation du matériau du dispositif de maintien (60).

4. Procédé selon la revendication 2, **caractérisé en ce qu'**au moins un emplacement (92) de rupture préférentielle est configuré comme entaille sur un côté plan (94, 96) du dispositif de maintien (60).

5. Procédé selon la revendication 2, **caractérisé en ce qu'**au moins un emplacement (66, 68; 72, 74) de rupture préférentielle est configuré comme périphérie extérieure du dispositif de maintien (60).

6. Procédé selon la revendication 2, **caractérisé en ce qu'**un certain nombre d'emplacements (66, 68; 72, 74) de rupture préférentielle sont réalisés à la périphérie extérieure et/ou sur le diamètre intérieur (80) de l'ouverture centrale (64).

7. Procédé selon la revendication 2, **caractérisé en ce que** l'épaisseur (82, 84) est variable.

8. Procédé selon la revendication 7, **caractérisé en ce qu'**il présente un rétrécissement (84) dans lequel s'étendent des nervures (86) déformables plastiquement.

9. Procédé selon la revendication 2, **caractérisé en ce qu'**au moins un emplacement (66, 68; 72, 74; 92) de rupture préférentielle configuré comme entaille présente un indice de forme Kₜ > 2,0.

10. Procédé selon la revendication 6, **caractérisé en ce qu'**au moins deux emplacements (66, 68; 72, 74) de rupture préférentielle sont disposés l'un en face de l'autre à la périphérie extérieure et/ou sur le diamètre intérieur (80) de l'ouverture centrale (64).

11. Procédé selon la revendication 6, **caractérisé en ce qu'**au moins deux emplacements (66, 68; 72, 74) de rupture préférentielle sont disposés en positions de 6 heures et de 12 heures à la périphérie extérieure du dispositif de maintien (60), en positions de 3 heures et de 9 heures à la périphérie extérieure et/ou sur le diamètre intérieur (80) de l'ouverture centrale (64) en position de 6 heures et en position de 12 heures ou en position de 3 heures et en position de 9 heures.
